# EUROPÄISCHE PATENTSCHRIFT

(11) **EP 1 477 427 B1**
(45) Veröffentlichungstag und Bekanntmachung des Hinweises auf die Patenterteilung: **07.03.2007**
(21) Anmeldenummer: 04010249.3
(22) Anmeldetag: 30.04.2004
(51) Int. Cl.: B65D 88/00, B65D 88/08, B65D 90/08, B65D 90/02, F16J 15/12, F16L 23/18, F16L 23/04

(54) **Mehretagiger Behälter aus stirnseitig nach aussen gebördeltem Metallblech**
Modular container made of metal elements having outwardly curved edges
Conteneur modulaire fabriqué à partir des éléments métalliques avec des bords courbes vers l'extérieur

(30) Priorität: 14.05.2003 DE 20307555 U
(43) Veröffentlichungstag der Anmeldung: 17.11.2004
(73) Patentinhaber: Volkmann GmbH, 59494 Soest (DE)
(72) Erfinder: Volkmann, Thilo, 59494 Soest (DE)
(74) Vertreter: GROSSE BOCKHORNI SCHUMACHER

(56) Entgegenhaltungen:
- DE-A1- 4 009 659
- DE-U1- 8 810 118
- US-A- 1 863 122

## Beschreibung

Die Erfindung betrifft einen mehretagigen Behälter aus stirnseitig nach außen gebördeltem Metallblech mit den Merkmalen des Oberbegriffs des Anspruchs 1.

Um im Behälterbau den Wunsch nach variierbaren Behältergrößen oder Behältern mit veränderlichen Boden- oder Wandteilen zu befriedigen, ist es bei mehretagigen Behältern üblich, die Festigkeit des Behälters im Stoßstellenbereich durch einen entsprechend widerstandsfähig ausgelegten Spannring zu erreichen (DE-U1-88 10 118). Zwischen dem Spannring und dem nach außen gebördelten Stirnenden der Behälterwand- oder bodenteile sind an den Stoßstellen elastische Dichtringe eingefügt. Ein elastischer Dichtring oder eine der Lippen eines mehrgliedrigen elastischen Dichtrings ist zwischen den aufeinander zuweisenden Stirnflächen der nach außen gebördelten Metallbleche, aus denen die Boden- und Wandteile bestehen, eingefügt. Während der Spannring und die radial nach außen gebördelten Stirnenden auch in direktem Kontakt aneinander liegen können, wird auf den Dichtring zwischen den aufeinanderzuweisenden radial nach außen gebördelten Stirnflächen allerdings nicht verzichtet.

Zur Festigkeitserhöhung an der Stoßstelle kann zusätzlich zum Spannring ein innenliegender, die beiden benachbarten Behälterwände zu einem Teil überdeckender Stützring Verwendung finden (DE-A1-40 09 659).

DE U1 88 10 118U offenbart ein mehretagiger Behälter gemäss dem Oberbegriff des Anspruchs 1.

Im Vergleich zu anderen bekannten mehretagigen Behältern aus Metallblech, bei denen die Stoßstellen mit massiven Flanschen versehen sind, welche mit der Behälterwandung umlaufend verschweißt sind, haben die gattungsgemäßen mehretagigen Behälter mit gebördelten Stirnenden den Vorteil erheblich preisgünstigerer Herstellbarkeit.

Um allerdings derartig ausgebildeten Stoßstellen genügend Festigkeit zu verleihen, sind die bekannten Bördelstellen durch Mehrfachbördelungen in alternierende Richtungen stegartig versteift. Diese Versteifungen haben unter anderem den Nachteil, daß sie Rillen bilden, in welchem sich Lager gut festsetzen kann. Dies ist, unter anderem im Lebensmittel- und Pharmaziebereich, schon aus hygienischen Gründen unerwünscht.

Davon ausgehend liegt der Erfindung die Aufgabe zugrunde, einen gattungsgemäßen mehretagigen Behälter bei Verzicht auf anschweißbare Flansche an den Stoßstellen stabil auszubilden, ohne daß dabei Bördelfalten oder -rillen entstehen, an denen sich Lager gut ansetzen kann.

Zu Lösung dieser Aufgabe wird ein mehretagiger Behälter mit den Merkmalen des Anspruchs 1 vorgeschlagen. Erfindungsgemäß ist demnach ein eigenständiger, den Behälter aussteifender Formhaltering vorgesehen, der an seinen beiden Stirnseiten Formhalteflächen aufweist, mit denen die aus Behälterblech geformten benachbarten Wand- bzw. Bodenteile im Bereich ihrer radial nach außen gebördelten Stirnflächen unmittelbar verspannt werden. Ein oder mehrere zusätzlich vorgesehene/r Dichtring/e ist radial innerhalb oder radial außerhalb des aussteifenden Formhalterings separat zwischen den nach außen gebördelten Stirnflächen (aus Metallblech) der benachbarten Boden- oder Wandteile des mehrstöckigen Behälters oder (einzeln) zwischen diesen Stirnflächen und dem aussteifenden Formhaltering eingespannt.

Durch die Erfindung wird ein einfach herstellbarer und einfach aufgebauter mehretagiger Behälter verwirklicht, bei dem die benachbarten Boden- bzw. Wandteile in direktem, insbesondere metallischen Kontakt zusammengefügt werden. Dies ermöglicht bei hoher Steifigkeit eine Leichtbauweise in modularem Aufbau. Im produktberührten Oberflächenbereich des Behälters, insbesondere an den Stoßstellen können Toträume in einfacher Weise vermieden werden, so daß auch hohen und höchsten hygienischen Anforderungen, sowie einer einfachen Reinigungsmöglichkeit Rechnung getragen wird. Die bei den bekannten mehretagigen, daß heißt modular aufgebauten Behältern auftretenden breiteren Probleme, wie elektrostatische Aufladungen und das Abscheren von Dichtungen in Betrieb unter Vakuumlast sowie Formhalteprobleme aufgrund ungleicher Lastverteilung an den Spannzangen sowie Zentrierungsprobleme entfallen. Da bei der erfindungsgemäßen Stapelverbindung die Stirnenden der benachbarten Behälterwand- bzw. -bodenteile aus dem Blech des Behältermantels bzw. des Behälterbodens geformt sind, also aus Blechen mit einer Wandstärke von < 10 mm, insbesondere < 4 mm, ist die Herstellung der Module sehr einfach und rationell möglich. Die unvermeidbar auftretenden Toleranzen bei der Blechverformung (Bördelung) sind aufgrund der Verwendung des eigenständigen, den Behälter aussteifenden Formhalterings mit stirnseitigen Formhalteflächen unkritisch und es kann eine präzise Stapelhöhe eingehalten werden, die auch bei Über- und Unterdruckanwendungen nicht arbeitet, so daß der Behälter höhen- bzw. längenstabil ist.

Der eigenständige, den Behälter aussteifende Formhaltering mit seinen stirnseitigen Formhalteflächen übt seine Stützfunktion vorzugsweise an den radial nach außen gebördelten Flanschen an den Stirnenden der, vorzugsweise umlaufend geschlossenen Boden- oder Wandteilen des mehretagigen Behälters aus. Er kann sowohl durch spannende Bearbeitung aus Voll- oder Rohrmaterial, als auch durch jedes Form- oder Gießverfahren oder Gießpreßverfahren mit oder ohne mechanischer Nachbearbeitung hergestellt werden. Als Materialien kommen neben Metallen oder Metallegierungen auch Kunststoffe mit oder ohne Verstärkungen in Betracht. An dem den Behälter aussteifenden Formhalterung können, vor allem radial innen, Behältereinbauten befestigt werden, wie Trichter, Filterplatten, Verschließ- oder Trennelemente und viele andere mehr.

Der nach radial außen gebörtelte Flanschbereich an den Stirnenden benachbarter Böden- oder Wandteile können in ihrem radial äußeren Bereich mit kragenförmig, das Wand- oder Bodenteil umgebenden Versteifungsstegen versehen sein, die ebenfalls durch Bördeln aus dem Metallblech des Behälters gebildet werden.

Die vorgenannten sowie die beanspruchten und in den Ausführungsbeispielen beschriebenen erfindungsgemäßen zu verwendenden Bauteile unterliegen in ihrer Größe, Formgestaltung, Materialauswahl und technischen Konzeption keinen besonderen Ausnahmebedingungen, so daß die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnung, in denen - beispielhaft - bevorzugte Ausführungsbeispiele des erfindungsgemäßen mehretagigen Behälters aus stirnseitig nach außen gebörteltem Metallblech dargestellt sind. In der Zeichnung zeigen:
- Fig. 1A: einen mehretagigen Behälter aus einen oberen Bodenteil und vier Wandteilen in einer ersten Ausführungsform im schematisierten Achsialabschnitt;
- Fig. 1B: einen mehretagigen Behälter aus einen oberen Bodenteil und zwei Wandteilen in einer zweiten Ausführungsform im Achsialschnitt;
- Fig. 2A bis 2D: eine ausschnittsweise dargestellte Stoßstelle benachbarter Behälterbauteile im Vertikalschnitt mit radial außenliegenden Profil-Dichtringen, wobei Fig. 2A eine Grundform des aussteifenden Formhalteringes zeigt, Fig. 2B den Formhaltering mit angeschweißter Filterplatte, Fig. 2C den Formhaltering mit eingesetztem Trichter (Schweißnaht nicht dargestellt) und Fig. 2D den Formhaltering mit eingesetzter aber nicht verschweißter Filterplatte;
- Fig. 3A/3B: eine andere Ausführungsform des Formhalterings mit einer Schwalbenschwanzanordnung zur Aufnahme eines innenliegenden Profildichtringes, wobei Fig. 3A eine Grundform und Fig. 3B eine Ausführungsform mit einem Versteifungselement für einen von dem Dichtring gebildeten Trichteransatz zeigt;
- Fig. 4: eine Abwandlung des Formhalterings nach Figuren 3A/B mit einer Auskragung zum Stützen einer trichterähnlich ausgebildeten Profildichtung;
- Fig. 5: eine weitere Alternative eines Formhalterings mit Schwalbenschwanzausbildung in durchmesserverstärkter Ausführung;
- Fig. 6A bis 6C: drei verschiedene Ausbildungen der gebördelten Stirnenden benachbarter Behälter- oder Bodenteile, wobei in Fig. 6A ein kurzer und in Fig. 6C ein langer einseitiger Kragen und in Fig. 6B labyrinthartig überlappende beidseitig ausgebildete Kragen vorgesehen sind;
- Fig. 7A/B: einen Formhaltering mit an die Blechbördelung bis in den Biegebereichen angepaßten Konturflächen, wobei Fig. 7A Behälter-/Bodenteile mit beidendigen Kragen und Fig. 7B ohne Kragen darstellt;
- Fig. 8: einen Formhaltering mit beidendig vorgesehenen Einzelaufnahmen für je einen Dichtring;
- Fig. 9A bis 9C: einen Formhaltering mit stirnseitig ausgebildeten Radien und unterschiedlichen Neigungen der Stirnflächen des Formhalterings und der Behälterstirn enden zur Aufbringung erhöhter Klemmkräfte, wobei die Klemmflächen der Spannringe in Fig. 9A radial weit innen, in Fig. 9B über einen größeren Radius verteilt und in Fig. 9C radial weit außen liegen.
- Fig. 10: einen Spannring mit radial weit außenliegenden Klemmflächen;
- Fig. 11A/B: einen Formhaltering mit angepaßter Stirnflächenkontur (ähnlich wie in Fig. 7A/B) jedoch für die Aufnahme eines einzigen außenliegenden Dichtrings;
- Fig. 12A bis 12D: einen zweiteiligen Formhaltering mit Scheibenventil (Entleerungsklappe), wobei Fig. 12A einen Schnitt durch das Scheibenventil entlang der Drehachse, Fig. 12B eine Detailvergrößerung von Fig. 12A, Fig. 12C einen Schnitt senkrecht zur Drehachse und Fig. 12D eine Detailvergrößerung von Fig. 12C zeigt.

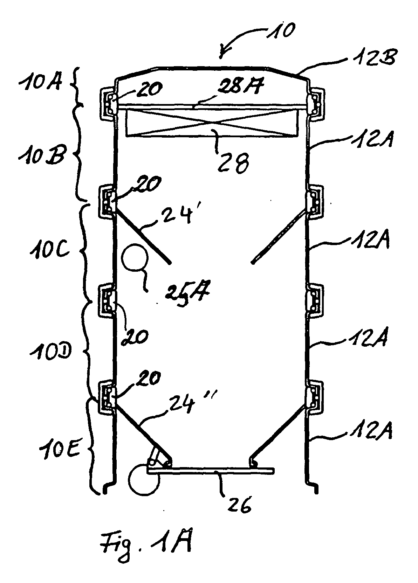

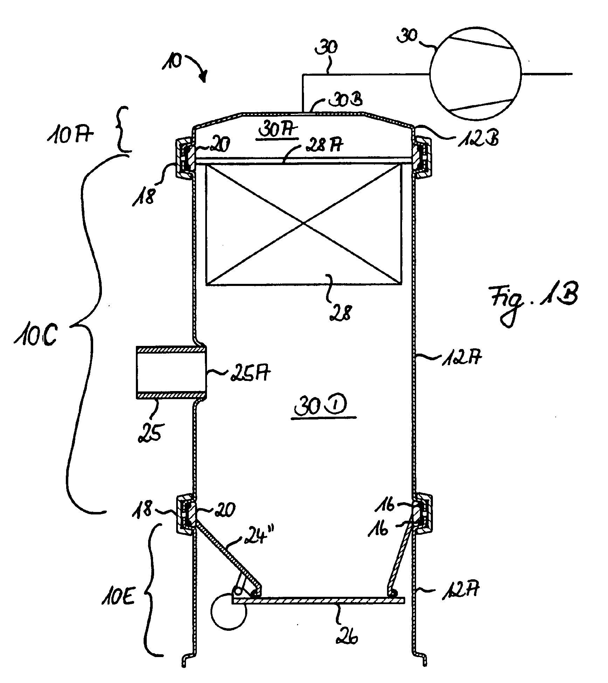

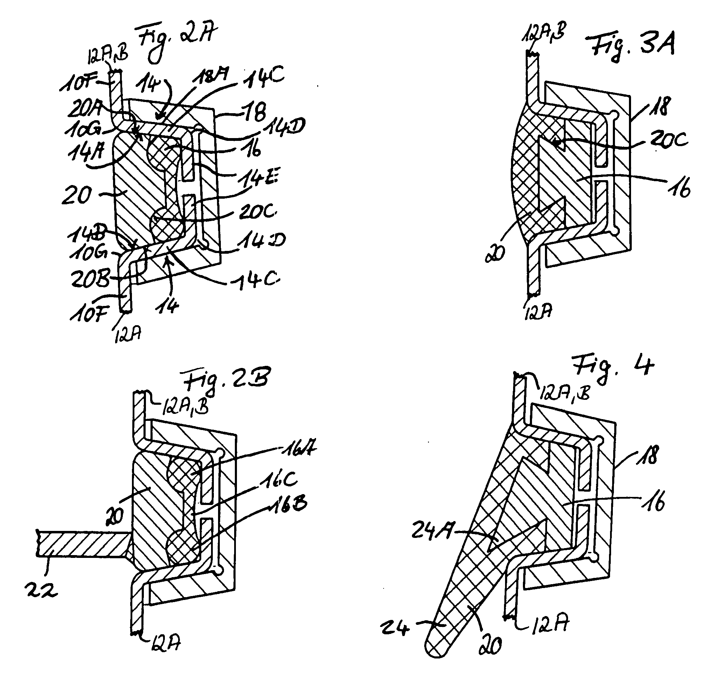

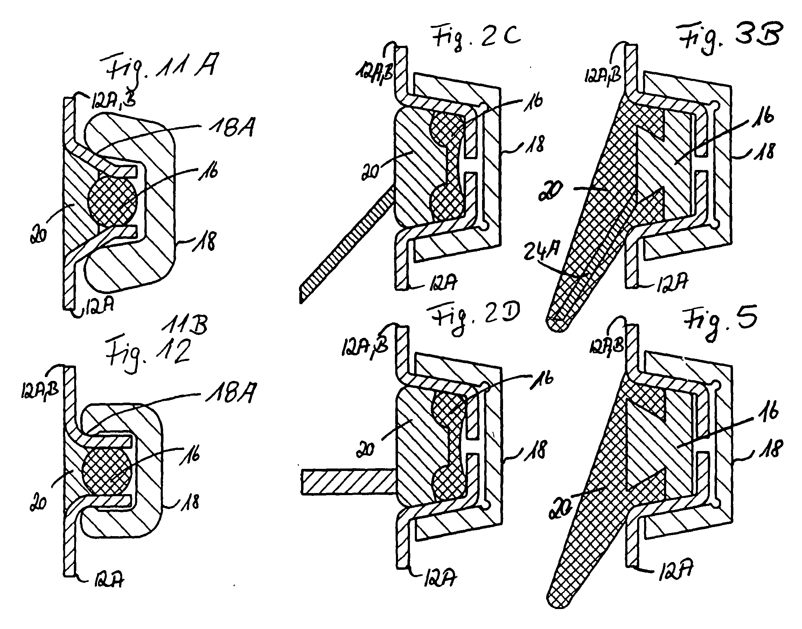

Der aus Fig. 1A ersichtliche fünfetagige Behälter 10 mit den Behälteretagen 10A bis 10 E besteht aus vier gleichen zylindrischen, umlaufend geschlossenen Wandteilen 12A und einem topfförmigen Bodenteil 12B an seinem oberen Ende. Das unterste Wandteil 12A dient lediglich als Stehhilfe zur Aufnahme eines Entleerungsrichters 24", der an seinem verjüngten Ende eine Absperrklappe 26 trägt. Sowohl dieser untere Trichter 24" als auch ein höher gelegener Trichter 24' sowie ein Filterelement 28 werden jeweils von einem Formhaltering an dessen radialer Innenseite getragen. Sie können mit dem Formhaltering 20, wie er weiter unten beschrieben wird, z. B. durch Schweißen umlaufend verbunden sein. Die Stoßstellen der Behälteretagen 10A bis 10E sind so, wie in Figuren 2A ff. näher dargestellt, ausgeführt und werden nachfolgend anhand der Fig. 2A ff. näher erläutert.

Wie aus Fig. 1A ferner ersichtlich, kann eine Behälteretage 10C vorgesehen, die als Zyklon dient, um eine Grobabscheidung zwischen Förderfluid und Fördergut zu bewirken. Das hierzu verwendete Zyklonelement 24' ist in einer weiter unten noch zu beschreibenden Weise randseitig umlaufend mit einem Formhaltering 20, insbesondere durch Schweißen, verbunden. Wenn relativ lange Filterkerzen verwendet werden, kann die Etage 10B im Vergleich zur Behälteretage 10C höher ausgebildet. Das gilt wegen der Höhe der Austragseinheit entsprechend auch für eine ggf. höher ausgebildete Behälteretage 10E. Die Behälteretagen, insbesondere 10B und 10E, können daher zur radialen Aussteifung mit umlaufenden Sicken 15 versehen sein, die aus dem Material des Wandteiles 12A einteilig durch Verformen hergestellt sind.

Figur 1B zeigt ein weiteres Beispiel für die vielfältige modulartige Anwendung erfindungsgemäßer mehretagiger Behälter.

Aus Fig. 1B ist ersichtlich, daß eine Filterplatte 28A einen allgemein mit 28 bezeichneten Filter hält und die Filterplatte umlaufend dichtend mit dem weiter unten zu beschreibenden Formhaltering 20A verbunden ist, so daß sich oberhalb der Filterplatte 28A ein Saugraum 30A im Bodenteil 12B ausbildet, der über eine Saugöffnung 30B und Saugleitung 30C mit einer Vakuumpumpe 30 fluidisch und mit den üblichen Dichtungen versehen verbunden ist. Aufgrund der Fluiddurchlässigkeit des Filters 28, wird bei laufender Vakuumpumpe 30 und geschlossener Absperrklappe 26 des Entleerungstrichters 24" in dem unterhalb des Filters 28 ausgebildeten Zwischenlagerraum 30D ein Unterdruck erzeugt, der sich über eine im Wandteil 12A vorgesehene Aussaugöffnung 25A und einen zugehörigen, vorzugsweise tangential angesetzten Ansaugstutzen 25 in einen hier nicht dargestellten Vorratsbereich für zu förderndes Gut in bekannter Weise fortsetzen läßt. Ein derartiger Grundaufbau einer intersmittierend arbeitenden Vakuumfördereinrichtung ist ansich bekannt. Die umlaufenden Stoßstellen der Mantelfläche der benachbarten Behälteretagen 10A, 10C und 10E können in einer zu den nachfolgenden Figuren (ab Fig. 2) beschriebenen Weise ausgebildet sein.

Alternativ kann die Vakuumpumpe 30 unmittelbar auf dem oberen Boden 12B in bekannter Weise angeordnet sein. Als Filterelement 28 können sogenannte Filterkerzen hängend an der Filterplatte 28 bekannter Weise befestigt sein.

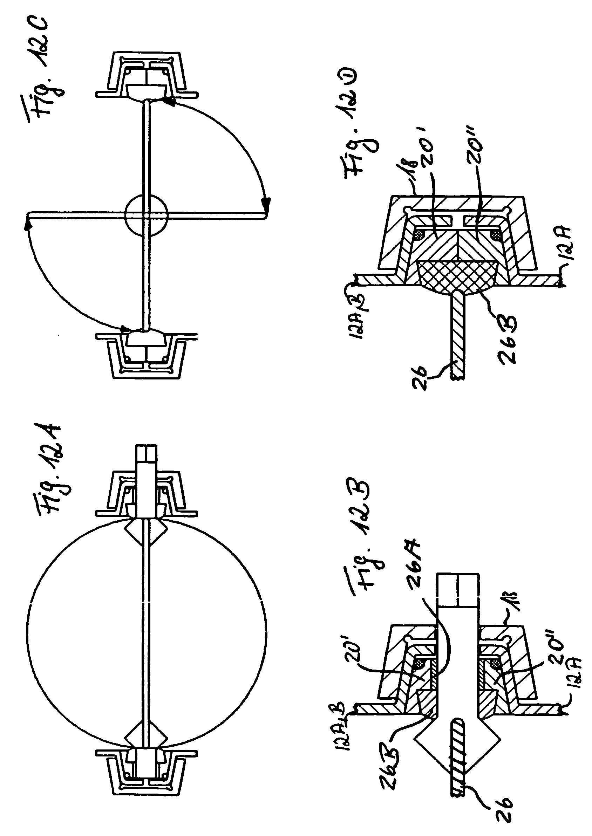

Wie aus Fig. 2A bis 2C ersichtlich ist, sind die Wandteile 12A und das Bodenteil 12B jeweils einstückig aus Behälterblech mit einer Wandstärke von etwa 1 bis 4 mm durch einen üblichen Formgebungsprozeß hergestellt, wobei, z. B. durch Rollverformung, gebörtelte Stirnenden 14 entstehen, welche untere (14A) und obere (14B) Stirnflächen als Anlageflächen aufweisen. Von der umlaufenden Behälterwandung 10F ausgehend befindet sich an den Stirnenden der Behälteretagen zunächst je ein Biegebereich 10G, an den sich ein gebörteltes Stirnende 14 in Form eines leicht kegelstrumpfförmigen Flansches 14C anschließt. Dieser kann radial außen stumpf enden, wie z. B. in Figuren 7B und 11A/B dargestellt, oder in einem weiteren, zum Biegebereich 10B entgegensetzt verlaufenden Biegebereich 14D übergehen, an welchen sich ein etwa behälterparallel umlaufender Versteifungssteg 14E anschließt. Diese Versteifungsstege 14E weisen in dem Ausführungsbeispiel nach Fig. 2A unter Freilassung eines Abstandsspaltes aufeinander zu.

Ein eigenständiger, den Behälter aussteifender umlaufend geschlossener massiver Formhaltering 20, welcher aus einem spanabhebend bearbeiteten Metallring besteht, ist zwischen die beiden Stirnenden an der Stoßstelle derart eingefügt, daß die oberen und unteren gebördelten Stirnflächen 14A und 14B der benachbarten Behälterwände sich an den zugehörigen stirnseitigen Formhalteflächen 20A, 20B des Formhalterings 20 im Bereich der Flansche 14C flächig abstützen. Im Biegebereich 10G ist der hier dargestellte Formhaltering 20 entgegengesetzt gerundet ausgeführt, so daß geringfügige Abmessungsabweichungen im Biegebereich 10G nicht stören. Der Innendurchmesser des Formhalterings 20 ist so gewählt, daß er mit dem Behälterinnendurchmesser übereinstimmt. An seiner radialen Außenfläche ist der Formhaltering 20 mit oberen und unteren Dichtungsaufnahmen 20C für die flächige Aufnahme eines symmetrisch aufgebauten umlaufenden Dichtungsring 16 vorgesehen, wobei der Dichtungsring 16 aus oberen und unteren Dichtwulsten 16A und 16B sowie einem Verbindungssteg 16C besteht (Fig. 2B). Der Dichtungsring 16 ist so bemessen, daß er einerseits an den beiden Stirnflächen 14A und 14B der Flansche 14C dichtend anliegt und sich andererseits in den Dichtungsaufnahmen 20C des Formhalterings 20 sowie (radial außen) gegen den jeweiligen Versteifungssteg 14E abstützt.

Der Formhaltering und die an seinen Formhalteflächen anliegenden Stirnflächen 14A und 14B der benachbarten Behälterteile werden in vorzugsweise unmittelbarer Berührung miteinander und Zuhilfenahme eines üblichen Spannringes 18 stramm miteinander verspannt. In den in Fig. 2A bis 2C dargestellten Ausführungsbeispielen liegen die Spannflächen 18A flächig an den voneinander fortweisenden Flanschflächen benachbarter Behälterteile an. Sie sind also mit gleicher Neigung wie die Flansche 14C und Formhalteflächen 20A und 20B, also leicht kegelstumpfförmig ausgebildet. Nach radial außen bildet das Spannmittel 18 einen Abstandsspalt zum Versteifungssteg 14E, um die Spannkräfte in üblicher Weise einwirken zu lassen.

Der Formhaltering 20 übt mit seinen Formhalteflächen 20A und 20B also eine die Behälterteile aussteifende Funktionen aus, ohne daß es erforderlich ist, die Stirnenden der Behälterteile selbst durch Vielfachverformung aussteifen zu müssen, wie dies bei bekannten Behältern der Fall ist. Der Behälter wird dadurch sowohl radial als auch axial ganz erheblich versteift und auch gegen Torsion geschützt, wobei die Herstellung und der Zusammenbau der Wand- und Bodenteile sehr einfach und rationell erfolgt. Gleichzeitig sichert der Formhaltering die radial außen- oder innenliegende umlaufende Dichtung, welche Spannkräfte des Spannrings ausschließlich zum Erzeugen der Dichtfunktion, aber nicht zur Übertragung von Haltekräften zwischen den benachbarten Behälterbauteilen nutzt. Wegen der einfach gestalteten Formgebung und der Zwischenfügung des Formhalterings zwischen die gebördelten Bereiche werden störende Ablagerungszonen für in den Behälter enthaltenes Gut in einfacher Weise vermieden.

In den nachfolgenden Ausführungsbeispielen 3A bis 11B liegen die Unterschiede zu dem Ausführungsbeispiel nach Figuren 2A bis 2C - soweit nicht in der Figurenkurzbeschreibung bereits erläutert - im Folgenden:

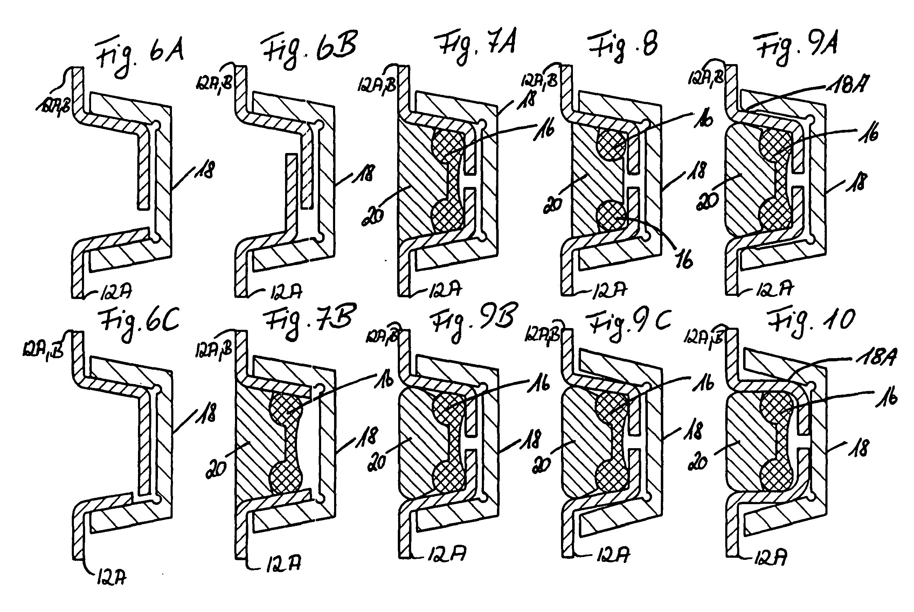

Die schwalbenschwanzförmigen radial inneren Ausprägungen der Formhalteringe nach Figuren 3A bis 5 gestatten eine formschlüssige Aufnahme innenliegender Dichtringe 16, wobei Verstärkungen 24A an den Formhalteringen angeschweißt (Fig. 3A/B) oder mit diesen einstückig ausgebildet sind (Fig. 4) um radial in den Behälter hineinragende Verlängerungen, wie trichterförmige Lippen, des Dichtrings zu versteifen.

Das Ablagern von Verunreinigungen wird vor allem dadurch besonders konsequent vermieden, daß entweder der Formhaltering eine auch an die Bördelungsrundung angepaßte Kontur aufweist, wie in Figuren 7A und B. Alternativ kann sich ein radial innenliegender Dichtring - wie in Fig. 3A - in besonders einfacher Weise auch bei schlechterer Maßhaltigkeit an den Biegebereich 10G anlegen.

Gemäß Figuren 12A bis 12D kann ein erfindungsgemäßer, den Behälter aussteifender Formhaltering 20', 20" auch axial in der Mitte zweigeteilt sein, um ein bewegbares Bauteil, wie das dargestellte Scheibenventil aufzunehmen, welches z. B. als Entleerklappe für einen Förderer dienen kann. Im Bereich der Drehlager 26A sind dann entsprechend große Ausnehmungen in dem Formhaltering zur Lagerungsaufnahme vorgesehen.

### Bezugszeichenliste

- 10: mehretagiger Behälter
- 10A: Behälteretage
- 10B: Behälteretage
- 10C: Behälteretage
- 10D: Behälteretage
- 10E: Behälteretage
- 10F: Behälterwandung
- 10G: Biegebereich
- 12A: Wandteil
- 12B: Bodenteil
- 14: gebördeltes Stirnende
- 14A: Stirnfläche
- 14B: Stirnfläche
- 14D: Biegebereich
- 14E: Versteifungssteg
- 15: Sicke
- 16: Dichtring
- 16A: Dichtwulst
- 16B: Dichtwulst
- 16C: Verbindungssteg
- 18: Spannmittel
- 18A: Spannfläche
- 20: Formhaltering
- 20': Formhaltering
- 20": Formhaltering
- 20A: Formhaltefläche
- 20B: Formhaltefläche
- 20C: Dichtungsaufnahme
- 22: Boden
- 24: Trichter
- 24': Zyklonelement
- 24": Entleerungstrichter
- 24A: Trichterverstärkung
- 25: Ausgangstutzen
- 25A: Ausgangöffnung
- 26: Absperrklappe
- 26A: Drehlager
- 26B: Klappenranddichtung
- 28: Filterelement
- 28A: Filterplatte
- 30: Vakuumpumpe
- 30A: Saugraum
- 30B: Saugöffnung
- 30C: Saugleitung
- 30D: Zwischenlagerraum

## Patentansprüche

1. Mehretagiger Behälter (10), bestehend aus an Stoßstellen stirnseitig dichtend aufeinandergesetzten und mit mindestens einer benachbarten Behälteretage (10A; ...; (10E) lösbar verspannten umlaufend geschlossenen Wand- oder Bodenteilen (12A; 12B) aus Metallblech mit nach radial außen gebördelten Stirnenden (14) und ferner bestehend an benachbarten Stirnenden wirksamen Dichtringen und Spannmitteln
**dadurch gekennzeichnet,**
**daß** an jeder Stoßstelle ein eigenständiger, den Behälter (10) aussteifender Formhaltering (20; 20', 20") vorgesehen ist, der an seinen beiden Stirnseiten Formhalteflächen (20A, 20B) aufweist,
**daß** die benachbarten Wand- bzw. Bodenteile (12A; 12B) im Bereich ihrer Stirnflächen (14A, 14B) auf den Formhalteflächen (20A, 20B) des aussteifenden Formhalteringes (20; 20', 20") unmittelbar stramm verspannt aufsetzen und
**daß** ein Dichtring (16) radial innerhalb oder radial außerhalb des aussteifenden Formhalteringes separat zwischen den nach radial außen gebördelten Stirnflächen (14A, 14B) aus Metallblech der benachbarten Boden- oder Wandteile (12A; 12B) des mehretagigen Behälters (10) oder zwischen diesen Stirnflächen und dem aussteifenden Formhaltering eingespannt ist.

2. Mehretagiger Behälter nach Anspruch 1, **dadurch gekennzeichnet, daß** der Formhaltering (20; 20', 20") mit mindestens einer Dichtungsaufnahme (20C) versehen ist.

3. Mehretagiger Behälter nach Anspruch 2, **dadurch gekennzeichnet, daß** die Dichtungsaufnahme (20C) mit Hinterschneidungen, insbesondere als schwalbenschwanzförmige Kontur ausgebildet ist.

4. Mehretagiger Behälter nach einem der Ansprüche 1 bis 3, **dadurch gekennzeichnet, daß** der Formhaltering mittelbar oder unmittelbar Behältereinbauten, wie Trichterelemente (24), Böden (22), Filterelemente (28), Absperr- oder Schließelemente (26) oder Verstärkungselemente (24) für derartige Einbauten aufweist.

5. Mehretagiger Behälter nach einem der vorangehenden Ansprüche, **dadurch gekennzeichnet, daß** der Formhaltering (20', 20") zur Aufnahme von Einbauten, wie einer bewegbaren, insbesondere verschwenkbaren Absperrklappe (26) zweigeteilt ist.

6. Mehretagiger Behälter nach Anspruch 5, **dadurch gekennzeichnet, daß** der zweiteilige Formhaltering (20', 20") mindestens eine Ausnehmung zur Aufnahme eines Einbauteils, wie eines Drehlagers (26A) aufweist.

7. Mehretagiger Behälter nach einem der vorangehenden Ansprüche, **dadurch gekennzeichnet, daß** mindestens ein Wand- oder Bodenteil (12A; 12B) ein radial außen angeordneten, sich etwa parallel zur Behälterwandung erstreckenden Versteifungssteg (14E) aufweist, welcher einstückig mit dem gebördelten Stirnende (14) an dessen radialer Außenseite durch einen Verformungsvorgang, wie eine Bördelung vorgesehen ist.

## Claims

1. Modular container (10), consisting of all-around closed wall or base parts (12A; 12B) placed one above the other, in a sealing manner on the front at impact points, and detachably clamped with at least one adjacent container tier (10A...; 10E), made of metal plate with radially outwardly curved edges (14) and furthermore consisting of sealing rings and clamp means effective on adjacent edges, **characterized in that** an independent, form-retaining ring (20; 20', 20") which reinforces the container (10), and on its two edges has form-retaining surfaces (20A, 20B), is provided at each impact point, **in that** the adjacent wall or base parts (12A; 12B) in the region of their edges (14A, 14B), directly tightly clamped, sit on the form-retaining surfaces (20A, 20B) of the reinforcing form-retaining ring (20; 20', 20") and **in that** a sealing ring (16), radially inside or radially outside the reinforcing form-retaining ring is wedged separately in between the radially outwardly curved metal plate edges (14A, 14B) of the adjacent base or wall parts (12A; 12B) of the modular container (10) or between these edges and the reinforcing form-retaining ring.

2. Modular container according to Claim 1, **characterized in that** the form-retaining ring (20; 20', 20") is provided with at least one gasket seat (20C).

3. Modular container according to Claim 2, **characterized in that** the gasket seat (20C) is constructed with undercuts having a swallow tail outline, in particular.

4. Modular container according to any one of Claims 1 to 3, **characterized in that** the form-retaining ring indirectly or directly has container fittings, such as funnel elements (24), bases (22), filter elements (28), shut off or closing elements (26) or reinforcing elements (24) for such fittings.

5. Modular container according to any one of the preceding claims, **characterized in that** the form-retaining ring (20', 20") is split into two for admission of fittings, such as a movable, in particular pivotable shut-off flap (26).

6. Modular container according to Claim 5, **characterized in that** the two-piece form-retaining ring (20', 20") has at least one recess for admission of a special fitting, such as a pivot bearing (26A).

7. Modular container according to any one of the preceding claims, **characterized in that** at least one wall or base part (12A; 12B) has a radially outwardly arranged stiffening bar (14E), which extends roughly parallel to the container wall and is formed integrally with the curved edge (14) on its radial exterior by a deformation process, such as flanging.

## Revendications

1. Conteneur multimodulaire (10) composé de parties de paroi ou de fond (12A; 12B) en tôle métallique superposées par des extrémités frontales étanches au niveau de points de jonction et fermées de façon amovible en périphérie en étant serrées sur au moins un module de conteneur voisin (10A ; ... ; 10E), les parties de paroi ou de fond (12A ; 12B) ayant des extrémités frontales (14) recourbées radialement vers l'extérieur, avec des bagues d'étanchéité et des moyens de serrage efficaces au niveau des extrémités frontales voisines,
**caractérisé en ce qu'**
au niveau de chaque point de jonction, une bague de maintien de forme (20 ; 20', 20") autonome sert à renforcer le conteneur (10) et a deux extrémités frontales, présentant des surfaces de maintien de forme (20A, 20B),
les parties de paroi ou de fond (12A ; 12B) voisines sont posées directement, dans la zone de leurs extrémités frontales (14A, 14B), en étant fortement tendues sur les surfaces de maintien de forme (20A, 20B) de la bague de maintien de forme (20 ; 20', 20") pour renfort, et
une bague d'étanchéité (16) est enserrée radialement à l'intérieur ou radialement à l'extérieur de la bague de maintien de forme pour renfort et ce, de manière séparée entre les extrémités frontales (14A, 14B) en tôle métallique recourbées radialement vers l'extérieur appartenant aux parties de fond ou de paroi voisines (12A ; 12B) du conteneur multimodulaire (10) ou entre les surfaces frontales et la bague de maintien de forme pour renfort.

2. Conteneur multimodulaire selon la revendication 1,
**caractérisé en ce que**
la bague de maintien de forme (20 ; 20', 20") est pourvue d'au moins un logement de joint (20C).

3. Conteneur multimodulaire selon la revendication 2,
**caractérisé en ce que**
le logement de joint (20C) présente des contre-dépouilles et est notamment profilé en forme de queue d'aronde.

4. Conteneur multimodulaire selon l'une des revendications 1 à 3,
**caractérisé en ce que**
la bague de maintien de forme présente, directement ou indirectement, des éléments encastrés, tels que des éléments d'entonnoir (24), des fonds (22), des éléments de filtre (28), des éléments de blocage ou de fermeture (26) ou des éléments de renfort (24) destinés à ces éléments encastrés.

5. Conteneur multimodulaire selon l'une des revendications précédentes,
**caractérisé en ce que**
la bague de maintien de forme (20', 20") est divisée en deux parties pour recevoir des éléments encastrés, tels qu'un clapet d'obturation (26) mobile, notamment pivotable.

6. Conteneur multimodulaire selon la revendication 5,
**caractérisé en ce que**
la bague de maintien de forme (20', 20") en deux parties présente au moins un évidement pour loger un élément encastré tel qu'un palier pivotant (26A).

7. Conteneur multimodulaire selon l'une des revendications précédentes,
**caractérisé en ce qu'**
au moins une partie de paroi ou de fond (12A ; 12B) présente un segment de raidissement (14E) situé radialement à l'extérieur et prolongé de manière quelque peu parallèle à la paroi du conteneur, lequel segment de raidissement est prévu d'un seul tenant avec l'extrémité frontale recourbée (14) au niveau de la face extérieure radiale de celle-ci grâce à un procédé de formage tel qu'un rabattement des bords.
